# EUROPEAN PATENT APPLICATION

(11) **EP 3 182 547 A1**
(43) Date of publication of application: **21.06.2017**
(21) Application number: 15199941.4
(22) Date of filing: 14.12.2015
(51) Int. Cl.: H02J 3/32, B60L 11/18, B63H 21/17, H02J 7/00, H02J 7/34

(54) **CHARGING CONTROL SYSTEM**

(71) Applicant: Siemens Aktiengesellschaft, 80333 München (DE)
(72) Inventor: Barstad, Lars, 7026 Trondheim (NO); Holen, Roy, 7037 Trondheim (NO); Kjesbu, Harald, 7517 Hell (NO); Tjong, Kenneth Presttun, 7051 Trondheim (NO)
(74) Representative: Maier, Daniel Oliver

(57) **Abstract**

A marine vessel electric power supply charging control system comprises one or more energy storage control units (15a, 15b, 15c, 15d), one or more energy storage devices (8a, 8b, 8c, 8d) coupled to the one or more energy storage control units; and at least one consumer (9, 10, 11, 12) on board the vessel. The charging control system further comprises a DC input (6) to receive a DC input voltage on a DC bus (7) from a shore DC supply; wherein the energy storage control unit comprises an input (32) to receive a DC input voltage from the DC bus (7), a voltage detector (26) to determine a DC voltage at an input to the energy storage device; a converter (24) to convert the DC input voltage to a required output voltage according to the DC voltage detected at the input to the energy storage device; and, an output (25) to output the required DC output voltage to an energy storage device (8a, 8b, 8c, 8d).

## Description

This invention relates to an electric charging control system and method, in particular for an electric ferry.

Electric ferries may operate solely with batteries on board to power the vessel, or with a hybrid of diesel generators and batteries. In either case, the batteries require charging from a shore supply when docked. Currently, this shore supply is an AC supply to the batteries on the vessel, which requires a combination of shore side control and synchronisation with the batteries. This is complex and requires special equipment, as well as having the potential for an unstable supply if the synchronisation is not correct.

In accordance with a first aspect of the present invention a marine vessel electric power supply charging control system comprises one or more energy storage control units; one or more energy storage devices coupled to the one or more energy storage control units; and at least one consumer on board the vessel; wherein the charging control system further comprises a DC input to receive a DC input voltage on a DC bus from a shore DC supply; wherein the energy storage control unit comprises an input to receive a DC input voltage from the DC bus, a voltage detector to determine a DC voltage at an input to the energy storage device; a converter to convert the DC input voltage to a required output voltage according to the DC voltage detected at the input to the energy storage device; and, an output to output the required DC output voltage to an energy storage device.

A single energy storage control unit may be provided for all energy storage devices, but preferably, each energy storage device is coupled to its own energy storage control unit.

This allows the voltage supplied from the DC bus to be adapted to each individual energy storage device, e.g. battery, meaning that if the batteries have discharged to different voltage levels, they can be charged individually at the voltage that they require.

Preferably, the system further comprises a vessel energy management system on board the vessel coupled to the voltage detector.

Preferably, the vessel energy management system is coupled to generators on board the vessel.

In the event of the vessel energy management system detecting that the batteries are running low, one or more generators may be started in order to charge the batteries, or to provide auxiliary power.

Preferably, the system further comprises a shore unit, the shore unit comprising an AC input for receiving an AC input voltage from a shore based AC supply; a transformer to transform the AC input voltage to a required AC voltage; and a rectifier to convert the transformed AC voltage to the DC bus voltage.

Conventionally, charging involves connecting an AC supply from the shore and converting to DC on board the vessel, or supplying AC to a shore based DC energy store, converting back to AC and controlling charging on board with an AC-DC converter. By carrying out the conversion to DC with a rectifier on the shore there is a corresponding reduction in the cost and weight of equipment required on board the vessel, as well as faster, higher powered charging being possible.

The rectifier may comprise a diode rectifier and chopper DC to DC converter unit, but preferably, the rectifier comprises a thyristor rectifier.

This is a less expensive option than using a diode rectifier and chopper.

Preferably, the shore unit further comprises an auxiliary battery to boost the voltage supplied to the DC bus.

With a single energy storage control unit, this may be mounted in the shore unit, connected to the DC bus, but preferably the one or more energy storage control unit are mounted on board the vessel.

In accordance with a second aspect of the present invention, a method of controlling charging of a marine vessel electric power supply comprises connecting a shore unit to the vessel, the shore unit comprising an AC supply, a transformer and a rectifier; converting the AC supply to DC in the shore unit; and supplying DC to the vessel; in an energy storage control unit detecting a DC voltage at an input to an energy storage device installed on the vessel; determining a DC voltage of an input from a DC bus; comparing the detected DC voltage with the voltage on the DC bus; converting the voltage from the DC bus to match the detected voltage; and supplying the converted voltage to the energy storage device.

Preferably, the AC supply is converted to DC in the shore unit by a thyristor rectifier.

An example of a marine vessel electric power supply charging control system in accordance with the present invention will now be described with reference to the accompanying drawings in which:
Figure 1 illustrates a first example of a marine vessel electric power supply charging control system according to the invention;
Figure 2 illustrates a second example of a marine vessel electric power supply charging control system according to the invention;
Figure 3 illustrates a third example of a marine vessel electric power supply charging control system according to the invention;
Figure 4 illustrates more detail of the embodiments of Figs.1 to 3 and,
Figure 5 is a flow diagram illustrating a method of controlling charging of a marine vessel electric power supply according to the present invention.

Battery powered vessels, for example ferries running between ports with charging stations at each port may operate as purely DC battery powered only, or with a hybrid of diesel generators and batteries. When docked at each port, they connect to the shore AC supply to charge the batteries ready for the next journey. Typically, the time available for charging is limited by the time taken to unload and load the ferry before it sets off again, which may be as little as 15 minutes for local ferries crossing short stretches of water. Connection between the shore charging station and the vessel is by cables which are just plugged in for the time available whilst the vessel is docked.

Charging the battery from the shore AC supply requires control of the charging current according to the battery behaviour. In some cases, such as small remote villages, the power capacity from the shore is too low to allow fast charging of the batteries in the limited time available. The vessel's onboard generator may be connected to the DC grid via a directly connected rectifier and generate DC when running, thereby contributing power to the DC grid and/or batteries in addition to what is available from the shore.

Control of the charging and discharging current to and from the batteries independently of the DC grid voltage requires a shore based controller and complex synchronisation. It can be difficult to synchronise sufficiently well for the system to be stable. AC supply from the shore passes through a matching transformer and a rectifier on the vessel to convert the supply to DC at the same voltage level as the onboard DC grid. There are two charging modes where the shore AC supply is too weak for rapid charging. At night, a direct connection to the AC supply is used, charging the batteries slowly over many hours. The demand from the vessel and from other users of the AC grid is low at this time. During the day, if the shore AC supply is too weak to provide the necessary voltage alone for the vessel, for rapid charging, or cannot supply the number of vessels requiring charge at the same time, then a battery buffer may be provided on shore, which is charged slowly from the AC grid. This battery charges from the shore supply via a rectifier and supplies DC to the vessel in the case where the vessel needs high power charging, but the shore supply is too weak to supply that without having an unreasonable impact on other users of the shore supply. The battery on shore is plugged into the on board DC grid when the vessel is docked and charges the batteries relatively quickly compared to what would be possible with the AC shore grid alone. The shore charging power has up to now been controlled by an AC/DC converter. When the shore supply cannot support rapid charging, the result is that it is necessary to convert from AC to DC to charge the battery on shore, then convert to AC-DC for charging the batteries on board the vessel. This adds complexity and many conversion operations. Although an entirely electric vessel is desirable, with no onboard generator, there will still be situations where the generator is required, either as a back-up, or an additional power source. The invention provides an improvement to the shore based charging which is applicable for any of these options where the vessel has onboard batteries which need to be charged when connected to a shore supply.

The present invention simplifies control of the charging of the onboard batteries when the voltage supply is unstable or insufficient, by means of an energy management system incorporating a chopper unit, so that a fixed DC input produced from the shore supply, or from the onboard generators, may be directly converted to a variable DC output as required by the vessel. The chopper unit may use any suitable technique to control the output voltage, including pulse width modulation, or frequency modulation.

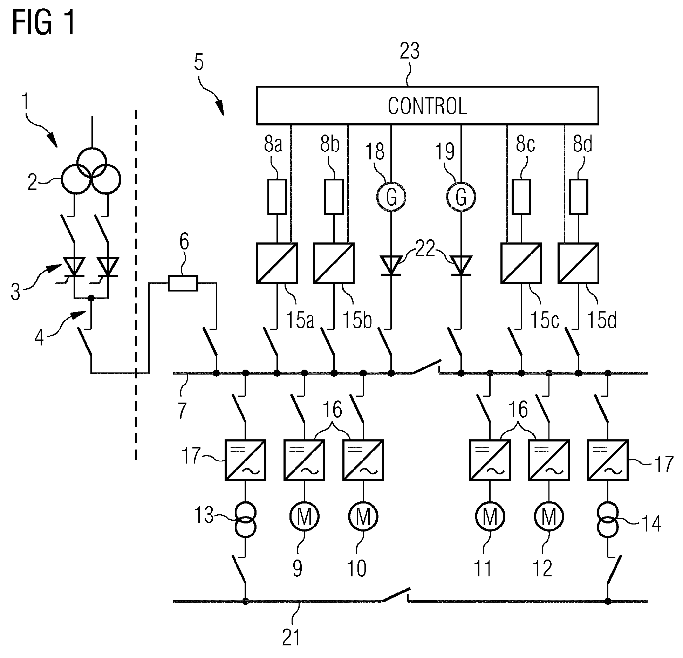

A first example of a charging control system according to the present invention is shown in Fig.1. On the shore side 1, an AC supply is fed into a transformer 2 and rectified by a thyristor rectifier 3 to produce a DC output 4. The thyristor rectifier allows the voltage and charging level to be controlled more effectively than the conventional rectifiers installed on the vessel. The thyristor rectifier allows for continuous regulation of shore power both for re-charging the batteries, independent of the energy level and voltage of the battery and for easier regulation and power limitation so that the shore connection is not over-loaded. Therefore, it is possible to charge more quickly, with more power, without risking tripping the shore connection breaker. The thyrsitor rectifier also avoids causing problems when the ferry is feeding the shore grid. In a conventional arrangement, the rectifiers rectify AC from shore to the batteries, but one of the rectifiers needs to be large enough to charge all of the batteries on board the ferry. Typically, the ferry has two large batteries. As a result, the rectifier is over-specified for its other role, when the ferry is in transit, of supplying the ship AC-system. This is because the load here is very low, so the rectifier may have to be as much as 20 to 30 times larger than needed for operational purposes, just to meet the requirements for charging from the shore. The present invention avoids this requirement by using a thyristor rectifier on shore.

When docked, a connector 6, on the vessel 5, connects the supply from the shore to a DC bus 7 of the vessel. The DC bus provides inputs to a plurality of energy storage devices, in this example, batteries 8a, 8b, 8c, 8d which store the energy until it is required by consumers, such as thrusters 9, 10, 11, 12, or auxiliary consumers 21 supplied through transformers 13, 14. In this example, the DC input to the batteries passes through an energy storage control unit, such as a chopper unit 15a, 15b, 15c, 15d, so that the DC voltage on the bus 7 can be adapted to a voltage which meets the charging requirement of each individual battery 8a, 8b, 8c, 8d. If the batteries have discharged to different voltage levels, they can be charged individually at the voltage that they require.

Conventionally, charging has required connecting an AC supply from the shore and converting to DC on board the vessel, although in some cases, the supply from the shore has been buffered, or boosted by a battery supplying DC directly. However, this has not been the sole source of supply and the vessel has had to carry the equipment to be able to accept direct AC supply. By carrying out the conversion to DC on the shore and provide energy storage control units to ensure that the voltage supply can be adapted to the required battery voltage, there is a corresponding reduction in the cost and weight of equipment required on board the vessel.

The thrusters 9, 10, 11, 12 are connected to the DC bus 7 through DC to AC converters 16 and the supply to the auxiliary consumers is converted from DC to AC in converters 17 before being input to the transformers 13, 14. There may be generators 18, 19 on the vessel which provide a back-up source of power in case the batteries prove to be insufficient (for example in heavy weather conditions, or if there has been a problem with recharging during docking), or the generators may be used in a hybrid mode for only certain parts of each journey, e.g. when well away from the shore. The AC voltage which is generated by the generators is rectified by diode rectifiers 22 and if necessary, filtered, before being supplied to the DC bus 7.

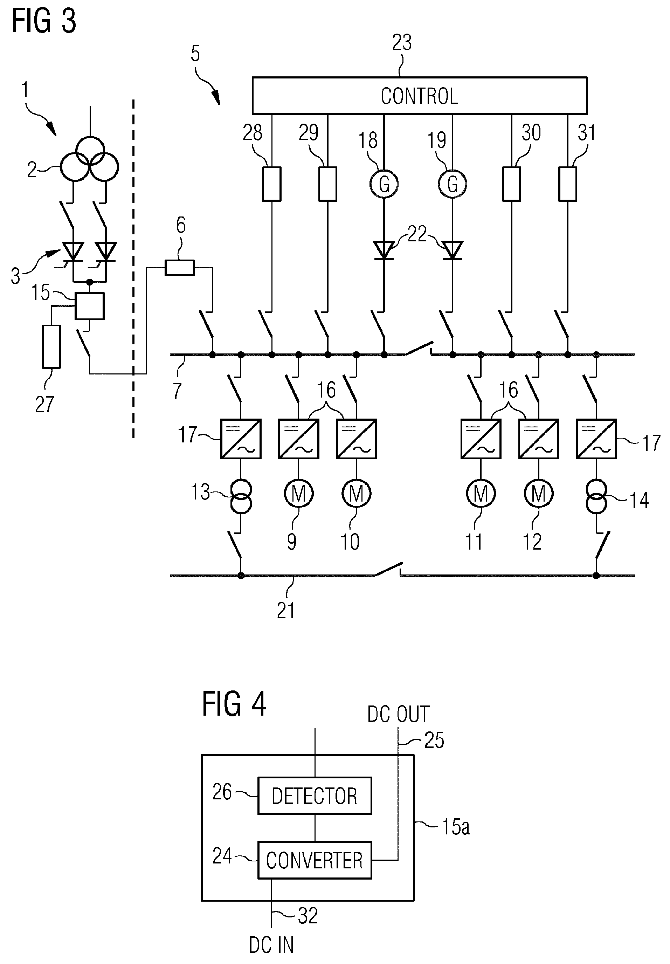

Fig.4 illustrates the chopper unit 15a in more detail. A voltage received at a DC input 23 of the unit, from the DC bus 7, is determined. A voltage detector 26 detects the voltage in the battery 8a and this is compared with the determined DC bus voltage. If the result of the comparison is that there is a difference in voltage which exceeds a permitted range, then the DC bus voltage is converted in converter 24 to a required voltage which is to be supplied to the battery 8a before the voltage is output to the battery from DC output 25. This comparison and conversion stage ensures that the DC output from the chopper 15a has a voltage which does not exceed the permitted range either side of the detected voltage of the battery 8a and prevents damage to the battery during charging.

An energy management system on board the vessel during operation uses a controller 23 to receives inputs from the detector 26 in each chopper unit 15a, 15b, 15c, 15d indicating the state of charge of each battery 8a, 8b, 8c, 8d and also communicates with the generators 18, 19 to control their operation, for example starting one or more generators if the battery levels are detected as falling below an acceptable threshold during a journey, or if demand from the auxiliary consumers is greater than expected. The energy management system is able to connect and disconnect individual batteries, generators, thrusters or auxiliary consumers in order to manage the available energy and requirements of the vessel effectively, or to take faulty parts out of the system and otherwise maintain operation. The energy management system interfaces with the energy storage control units 15a, 15b, 15c, 15d and these, in turn, interface with each battery. The energy storage control units are also capable of operating autonomously, for example providing local control of each battery without the controller 23 of the energy management system.

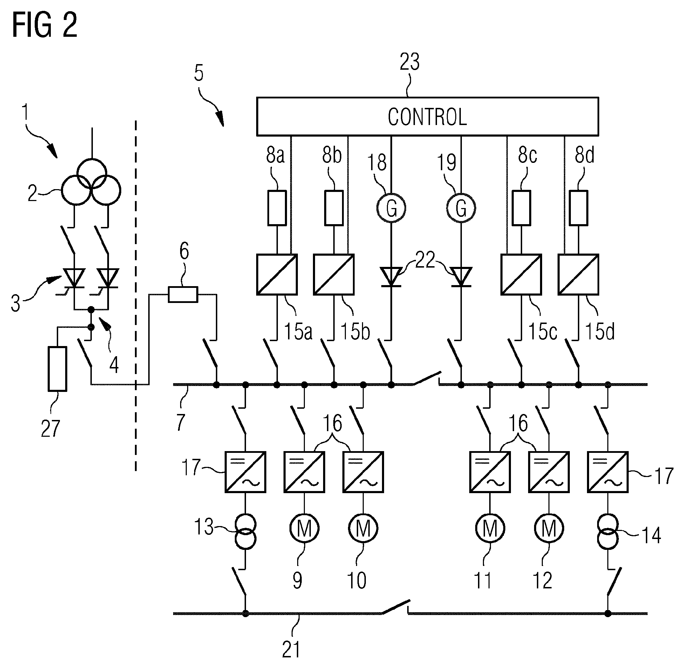

In a second example of the present invention, shown in Fig.2, the same components have the same reference numbers and function in the same way as described with respect to Fig.1. However, an additional battery 27 on the shore unit provides a boost to the vessel DC bus in situations where the AC supply is not sufficient to provide the voltage required by the vessel in the short time that is available when the vessel is docked. This battery is charged slowly by the shore supply at a rate that the shore supply can cope with and discharged quickly to provide DC to the vessel in the limited period that the vessel is present for charging its on board batteries. As in Fig.1, each battery on the vessel has its own energy storage control unit 15a, 15b, 15c, 15d, so that if the batteries have discharged by differing amounts during use, they can be charged up at the required voltage by converting the DC bus voltage accordingly. They do not all need to be able to receive the same voltage from the DC bus.

By contrast, Fig.3 shows an example in which the energy storage control unit 15 is part of the shore unit. Charging and discharging of the batteries is under the control of the energy storage control unit 15, ensuring that the shore supply and battery are not overloaded. Installing the energy storage control unit 15 as part of the shore unit, means that it is not necessary to retrofit the energy storage control unit to existing vessels, which is relevant in particular for smaller vessels where space might be an issue and cost savings are more significant. However, as a result, when charging, it is necessary that all batteries of battery units 28, 29, 30, 31 have the same voltage. This works well enough if all the batteries discharge equally in use, but if one battery 31 has had to be disconnected for some other reason, then when it comes to charging, care must be taken before connecting that battery back in. The energy management system controller 23 receives data from a monitoring unit (not shown) in each battery unit which monitors the battery voltages of each battery, as well as the voltage on the DC bus, so that the controller 23 can assesses a point at which that battery 31 has a voltage within an acceptable range of the voltage on the other batteries 28, 29, 30. The disconnected battery 31 is connected back in within this voltage window by closing a breaker between the DC bus and the battery unit and charging of all the batteries continues. Further cost saving can be achieved by using diodes in combination with the energy storage control unit 15 to control the voltage, instead of the thyristors 3. As with the example of Fig.2, the additional battery 27 on shore may be used to boost the available supply for charging. The embodiment of Fig.3, or its variants has a lower cost and puts less equipment on the vessel, but is more complicated to operate than the embodiments of Figs.1 and 2.

In each embodiment, the energy management system controller 23 on the vessel communicates with the shore unit, typically using a combination of wifi and radio link, but other suitable communication methods may be used. The exchange of data allows control of the charging process, so that the shore supply connection and, where present, shore battery boost, are not overloaded by the vessel.

Although the examples have all be described with an energy management control unit 23, it is possible to operate a simplified version with each onboard energy storage control unit 15a, 15b, 15c, 15d of Figs. 1 and 2 operating in local mode with the charging and discharging of the batteries controlled by the energy storage control units to prevent overload of the shore supply and battery. However, the benefit of also having an energy management system, indicated by controller 23, is that the configuration can be optimised both for charging and for operation. Local operation of the example of Fig.3 requires more manual intervention, as the breakers between the DC bus 7 and the battery units 28, 29, 30, 31 can be closed locally, but if there is any voltage difference, then charging or discharging of other battery units under the control of the energy storage control unit 15 and operation of the generators 18, 19 may be required to get to a point where the voltages on all the batteries are the same, or sufficiently similar. Furthermore, the examples have been illustrated with thyristor rectifiers on the shore units to convert the transformed shore supply AC to DC, but an alternative would be to use diode rectifiers and a chopper DC to DC conversion unit, but this is more complex and costly than using a thyristor rectifier.

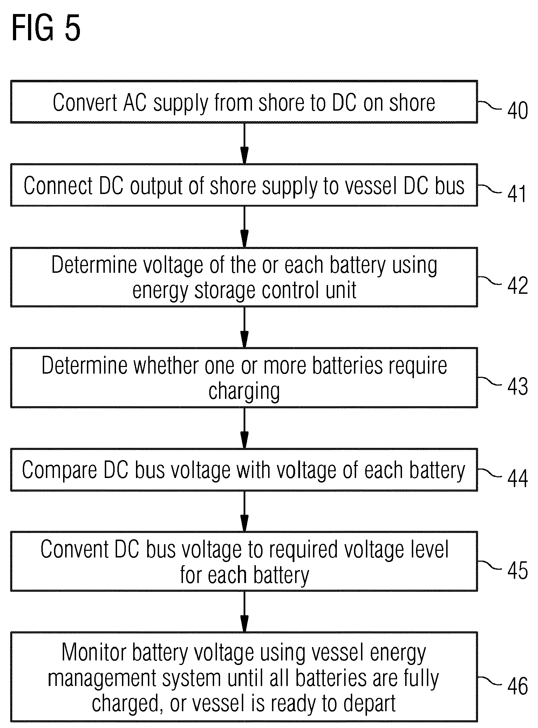

Figure 5 illustrates the steps in a method of controlling charging of a marine vessel electric power supply. The AC supply voltage from the shore grid is transformed and rectified in the shore unit 1 to convert 40 the supply to a DC voltage. When the vessel docks, the DC bus of the vessel is connected 41 to the DC output of the shore unit. The energy management system obtains data 42 from the batteries about their level of charge, either directly or from the energy storage control unit of each battery, according to the embodiment and determines whether charging is required 43. For each battery that requires charging, the voltage level on the DC bus is compared 44 with the voltage in the battery and if necessary the DC bus voltage is converted 45 to the level required by the battery before charging begins, or if the DC bus voltage is within an acceptable range of the required voltage then no conversion is required before charging of that battery. The energy management system monitors 46 the batteries until they are fully charged or the vessel is ready to depart, then terminates the charging.

## Claims

1. A marine vessel electric power supply charging control system comprising one or more energy storage control units; one or more energy storage devices coupled to the one or more energy storage control units; and at least one consumer on board the vessel; wherein the charging control system further comprises a DC input to receive a DC input voltage on a DC bus from a shore DC supply; wherein the energy storage control unit comprises an input to receive a DC input voltage from the DC bus, a voltage detector to determine a DC voltage at an input to the energy storage device; a converter to convert the DC input voltage to a required output voltage according to the DC voltage detected at the input to the energy storage device; and, an output to output the required DC output voltage to an energy storage device.

2. A system according to claim 1, wherein each energy storage device is coupled to its own energy storage control unit.

3. A system according to claim 1 or claim 2, wherein the system further comprises a vessel energy management system on board the vessel coupled to the voltage detector.

4. A system according to claim 3, wherein the vessel energy management system is coupled to generators on board the vessel.

5. A system according to any preceding claim, wherein the system further comprises a shore unit, the shore unit comprising an AC input for receiving an AC input voltage from a shore based AC supply; a transformer to transform the AC input voltage to a required AC voltage; and a rectifier to convert the transformed AC voltage to the DC bus voltage.

6. A system according to claim 5, wherein the rectifier comprises a thyristor rectifier.

7. A system according to claim 5 or claim 6, wherein the shore unit further comprises an auxiliary battery to boost the voltage supplied to the DC bus.

8. A system according to any preceding claim, wherein the one or more energy storage control unit are mounted on board the vessel.

9. A method of controlling charging of a marine vessel electric power supply, the method comprising connecting a shore unit to the vessel, the shore unit comprising an AC supply, a transformer and a rectifier; converting the AC supply to DC in the shore unit; and supplying DC to the vessel; in an energy storage control unit detecting a DC voltage at an input to an energy storage device installed on the vessel; determining a DC voltage of an input from a DC bus; comparing the detected DC voltage with the voltage on the DC bus; converting the voltage from the DC bus to match the detected voltage; and supplying the converted voltage to the energy storage device.

10. A method according to claim 9, wherein the AC supply is converted to DC in the shore unit by a thyristor rectifier.
